(19) Europäisches Patentamt
European Patent Office
Office européen des brevets

(11) **EP 3 462 745 A1**

(12) **EUROPEAN PATENT APPLICATION**

(43) Date of publication:
**03.04.2019 Bulletin 2019/14**

(51) Int Cl.:
**H04N 21/24** *(2011.01)*    **H04N 21/44** *(2011.01)*

(21) Application number: **17382641.3**

(22) Date of filing: **27.09.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Nokia Solutions and Networks Oy
02610 Espoo (FI)**

(72) Inventors:
• **PEREZ GARCIA, Pablo
  28050 Madrid (ES)**
• **RUIZ ALONSO, Jaime
  28050 Madrid (ES)**
• **VILLEGAS NUNEZ, Alvaro
  28050 Madrid (ES)**

(74) Representative: **Herrero & Asociados, S.L.
Cedaceros, 1
28014 Madrid (ES)**

(54) **MODIFYING A BUFFER SIZE**

(57)    A method for modifying a buffer size at an apparatus, the method comprising receiving, at the apparatus, data representing a maximum lag value, M, for a video stream and increasing or decreasing the buffer size to provide a buffer time, S, less than or equal to the maximum lag value.

Figure 1

**Description**

TECHNICAL FIELD

Aspects relate, in general, to a method for modifying a buffer size at an apparatus, a system, and components thereof.

BACKGROUND

Streaming media can be broadly classified as multimedia data that is continuously received by and presented to an end-user while being delivered by a provider. A client end-user can use apparatus such as a media player for example to begin to play a data file (such as a digital file of a movie (video stream) or song (audio stream)) before the entire file has been transmitted. Live streaming can refer to Internet content delivered in real-time, as events happen, much as live television broadcasts its contents over the airwaves via a television signal. Video on demand (VOD) are systems which allow users to select and watch/listen to video or audio content such as movies and TV shows when they choose to, rather than having to watch at a specific broadcast time.

SUMMARY

According to an example, there is provided a method for modifying a buffer size at an apparatus, the method comprising receiving, at the apparatus, data representing a maximum lag value, M, for a video stream and increasing or decreasing the buffer size to provide a buffer time, S, less than or equal to the maximum lag value. The buffer size can be increased or decreased by respectively decreasing or increasing a clock speed, C, of a decoder for the buffer. In an example, variations in buffer size can therefore be achieved by temporarily modifying the speed of a decoder clock or equivalent methods such as dropping or repeating video or audio frames. The clock speed, C, of the decoder can be decreased or increased for a period of time, T, by a predetermined percentage, D. In an example, $T = |S0 - S| / D$, where S0 is the buffer time before modification. The method can further comprise determining a salient portion of the video stream, and generating a corresponding saliency signal for the video stream. The saliency signal can be a binary, continuous or discrete multi-valued measure of the saliency of the video stream. The saliency signal can be mapped to at least one maximum lag value for the video stream. The method can further comprise determining the salient portion of the video stream using video content of and/or audio content associated with the video stream. The method can further comprise transmitting the data representing a maximum lag value in-band with or out-of-band from the video stream.

According to an example, there is provided a system, comprising a lag sensitivity detector to receive data representing a video stream and transmit a saliency signal representing one or more salient portions in or events of a video stream generated using the data representing the video stream and/or an audio component of the video stream, a lag sensitivity actuator to receive the saliency signal and modify a buffer size at an apparatus using a maximum lag value, M, for the video stream generated using the saliency signal by increasing or decreasing the buffer size to provide a buffer time, S, less than or equal to the maximum lag value. The system can further comprise a decoder, and the lag sensitivity actuator can be further configured to decrease or increase the clock speed, C, of the decoder for a period of time, T, by a predetermined percentage, D.

According to an example, there is provided a lag sensitivity detector to receive data representing a video stream and transmit a saliency signal representing one or more salient portions in or events of a video stream generated using the data representing the video stream and/or an audio component of the video stream.

According to an example, there is provided a lag sensitivity actuator to receive a saliency signal representing one or more salient portions or events of a video stream and modify a buffer size at an apparatus using a maximum lag value, M, for the video stream generated using the saliency signal by increasing or decreasing the buffer size to provide a buffer time, S, less than or equal to the maximum lag value. The lag sensitivity actuator can be used to decrease or increase the clock speed, C, of a decoder for a period of time, T, by a predetermined percentage, D.

According to an example, there is provided a non-transitory machine-readable storage medium encoded with instructions executable by a processor of a user apparatus, the machine-readable storage medium comprising instructions to receive data representing a maximum lag value, M, for a video stream and instructions to increase or decrease an apparatus buffer size to provide a buffer time, S, less than or equal to the maximum lag value.

BRIEF DESCRIPTION OF THE DRAWINGS

Embodiments will now be described, by way of example only, with reference to the accompanying drawings, in which:

Figure 1 is a schematic representation of the main components in a content delivery system that contribute to content lag;

Figure 2 is a schematic representation of a system according to an example; and

Figures 3a-3c are schematic representations of output signals of a lag-sensitivity detector according to an example.

DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

In broadcasting, over-the-top content (OTT), refers to audio, video, and other media content delivered over the Internet. OTT content can be delivered using streaming media technologies, and may be either live or VOD. OTT providers typically use adaptive bitrate streaming (ABR), which is a technique used in streaming multimedia over computer networks. that operates by detecting a user's bandwidth and CPU capacity in real time and then adjusting the quality of a video stream accordingly. It uses an encoder which can encode a single source video at multiple bit rates, and a player client can switch between streaming the different encodings depending on available resources.

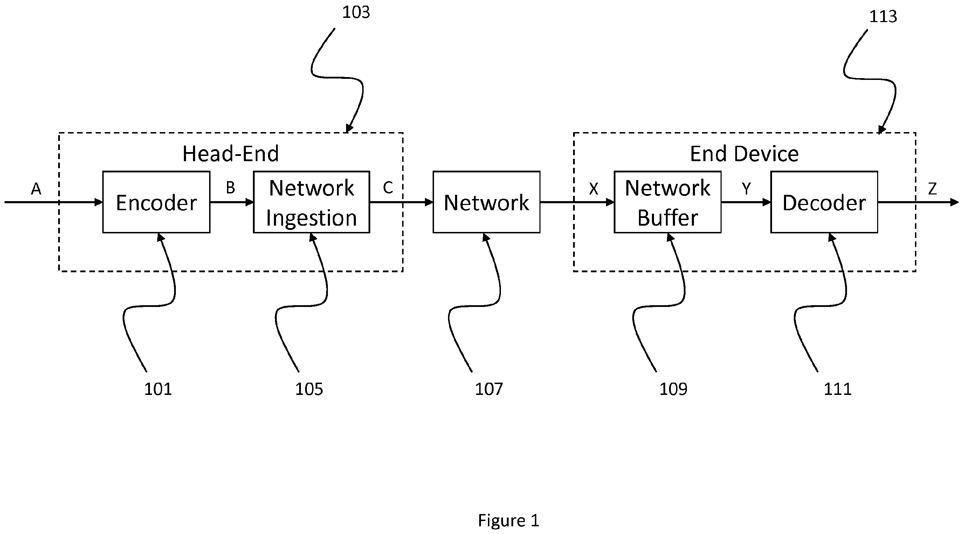

In this context, live content lag is characterised as the delay between the moment when content is captured in a multimedia distribution of a live event and the moment the content is displayed at an end user device. Figure 1 is a schematic representation of the main components in a content delivery system that contribute to content lag for a video stream A. As depicted, there is an coding/encoding delay (AB + YZ) at an encoder 101 of the head-end 103 of a delivery system providing the content and a decoder 111 at the end device 113, a network preparation delay (BC) resulting from network ingestion 105, a network 107 delivery delay (CX) and a network-oriented buffering delay in the client side (XY) resulting from the use of the network buffer 109. The total lag is AZ.

If the content is played at the same rate as it is produced (which is the normal situation in live video streaming for example), once live lag AZ is established, it remains constant for the streaming session. In traditional digital television services, video content is pushed from the head-end 103 to the end device 113, and the role of the network buffer 109 is handling IP network jitter and error correction systems (Forward Error Correction, FEC, or RETransmsions, RET and so on). Conversely, in OTT services using ABR streaming, content is pulled by the end device 113 from the head-end 103 (or the network 107 in general), and the network buffer 109 stores content downloaded from the network 107 and handles the bitrate switching (for capacity adaptation) while delivering the stream to the decoder 111 at the same pace as it is required to be consumed.

OTT content providers are normally optimized for VOD. Accordingly, in order to maximize the quality of content that can be delivered to end users, as well as to cope with network capacity variations, a network buffer 109 will typically be maintained with tens of seconds of content, such as video (for example, 30 seconds). In this way, even if the end device 113 is unable to receive any single byte of video for 30 seconds, the playout will not stop.

In the case of live video streaming, the network buffer 109 capacity adds up to the live content lag: the only way of having up to 30 seconds of video in the network buffer 109 is that the total lag (AZ) is higher than that. Once this is established, it can be maintained for the whole of a video session.

Broadcasting systems (such as satellite, IPTV, etc.) typically have a much smaller buffer 109, typically in the range of hundreds of milliseconds, and therefore they have much smaller live lag than OTT services. In this connection, in the case of popular live events, OTT users may watch a relevant situation in the event (e.g. a goal) seconds later than others consuming the same event in broadcasted TV. This is known to severely impair the Quality of Experience of the end user, which is categorised as the degree of delight or annoyance of the user of an application or service, and which results from the fulfilment of his or her expectations with respect to the utility and / or enjoyment of the application or service in the light of the user's personality and current state.

In order to reduce the size of the network buffer for adaptive streaming it is possible to use HTTP 2.0 PUSH features to reduce protocol overhead and therefore use smaller buffers. It is also possible to keep a smaller buffer by improving the rate selection algorithm using server-client collaboration. However, these methods are based on the assumption that once the live lag (AZ) is set, it is kept constant (unless there is a buffer underrun event, where the video is frozen and starts playing again when some content is received in the buffer). Furthermore, reducing the buffer has a cost in terms of Quality of Experience: either the risk of buffer underrun increases or it is needed to work in a bitrate much lower than the network average capacity to cope for capacity decreases.

According to an example, there is provided a method for modifying a buffer size at an apparatus. To this end, live lag is considered as another element of the QoE, which is relevant in live events and, in particular, in parts of the live events which are subject to the user demanding or desiring an instantaneous knowledge of the event (e.g. goals or penalty kicks in a football match). Such portions of live events can be considered to be salient portions of a video stream in which something is occurring that would interest the user to the extent that their QoE would be reduced if consumption of the portion(s) were delayed.

Accordingly, in an example, a method enables live detection and signalling of lag-sensitive moments in a live event. This can be done either manually or automatically. A size of a network buffer 109 of an end device 113 can then be adjusted to accommodate lag-sensitive moments. When lag-sensitiveness is high (e.g. when a salient portion is detected), the buffer size can be temporarily reduced, going back to its "stable" value when lag-sensitiveness has stopped. In an example, variations in buffer size can be achieved by temporarily modifying the speed of a decoder 111 clock (increase or decrease consumption rate of point Y in figure 1), or equivalent methods (e.g. dropping or repeating video or audio frames).

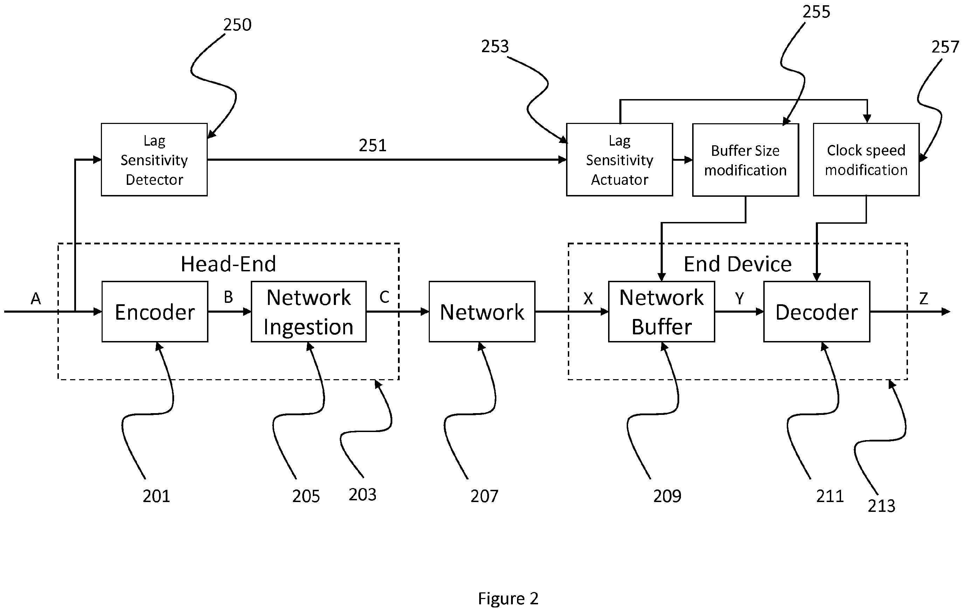

Figure 2 is a schematic representation of a system according to an example. A Lag-Sensitivity Detector 250 analyses a video stream A and can detect its sensitivity to lag. For example, in a football match, it can detect portions of an associated stream where it possible that a goal or a relevant event happens. Such portions are considered to be salient portions of the stream as they comprise events that a user will find interesting or exciting and which would cause a reduction in QoE if consumed with a high degree of lag after the event.

In an example, the lag sensitivity detector 250 can be manual, inasmuch as, for example, it may comprise a person (or group of people) providing manual signalling relating to the stream A while an event occurs. That is, a salient portion can be manually determined or detected and highlighted or otherwise flagged.

In another example, the lag sensitivity detector 250 can be automatic. For example, machine learning and training data can be used to train the detector 250 to detect salient portions of the stream A representing time/lag-sensitive events in the video stream. This can be performed using analysis of the video stream A and/or associated audio, such as from a commentator / speaker and/or a crowd watching the event in person. The training data can be provided using the results of manual detection of salient portions in one or more training video streams.

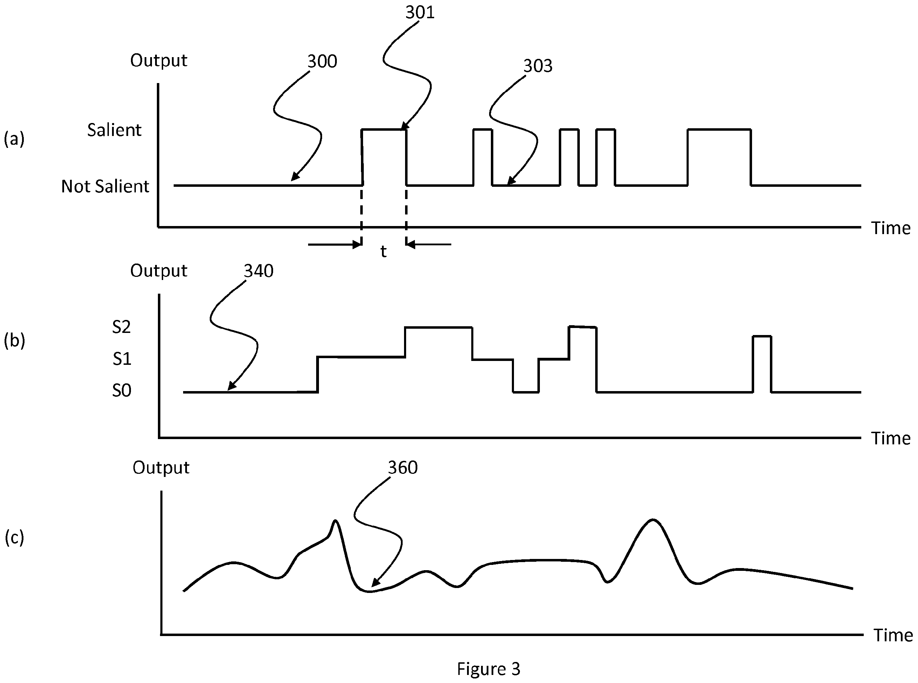

Output 251 of the lag-sensitivity detector 250 can be a binary, continuous or discrete multi-valued measure of the saliency of the video stream. Figure 3 is a schematic representation of an output signal of the lag-sensitivity detector according to an example.

In figure 3a, the output signal 300 is a binary signal providing an indication as to whether a scene is time-sensitive or not. That is, the signal 300 comprises a salient level 301, indicating that a scene or event is time-sensitive, and a not salient level 303 indicating that a scene or event is not time-sensitive. The width of a salient level 301 (e.g. t in figure 3a) represents the length of time that an event is considered to be salient or time-sensitive for. A corresponding change in the value or size (in time) of a buffer at a user-device can be made as will be described below.

In figure 3b, the output signal 340 is a discrete multi-valued measure of the saliency of the video stream, providing an indication as to whether a scene or event is time-sensitive or not. The signal 340 comprises, in the example if figure 3, three levels - S0, S1 and S2. S0 indicates that a scene or event is not time-sensitive, whilst S1 and S2 both indicate that a scene or event is salient or time-sensitive. The degree of saliency attributed to an event with a measure S2 is higher than that for an S1 scene. That is, an event with a measure S2 is considered to be more time-sensitive than a scene with an S1 (or S0) measure. Accordingly, in terms of saliency or time-sensitiveness, S0 < S1 < S2.

In figure 3c, the output signal 360 is a continuous measure of the saliency of the video stream, providing an indication as to whether a scene or event is time-sensitive or not. The signal 360 comprises, in the example if figure 3, a continuous measure of the saliency of a video stream over time. A relatively higher output value indicates a more salient portion of the video stream, and therefore an indication of the presence of a time-sensitive event compared with a relatively lower output value, and so on. In another example, the output of the lag sensitivity detector 250 can be a maximum lag for the system M.

The output 251 of the lag-sensitivity detector 250 is communicated to the end device 213. In an example, it can be inserted in-band as part of the video stream A (e.g. as metadata), or communicated out-of-band through a different data channel (not shown).

The Lag-Sensitivity Actuator 253 is a subsystem of the end device 213 which receives the signal 251 from the Lag Sensitivity detector 250 and controls or regulates 255 the size, S, (in seconds) of the network buffer 209 and modifies 257 the clock speed, C, of the decoder 211. In an example, the size of the network buffer is equal to or higher than the maximum lag M.

When the value of M changes, S0 is adjusted to its new value S, where S0 is the buffer time before modification. In an example, the buffer is enlarged (filled) or reduced (drained) by respectively decreasing or increasing C by a predetermined percentage (drift), D. This drift is applied for a period of time, T:

$$T = |S0 - S| / D$$

According to an example, a maximum drift is a design parameter, and values in the range of 10% - 25% should be reasonable for most implementations. The value of the network buffer S can be set at any time taking into consideration the target maximum latency M and a safety margin ß(t):

$$ß(t) \leq S \leq M \quad \text{if } ß(t) < M$$

$$S \geq ß(t)$$

otherwise

In an example, ß(t) can have two values: 0 when there are no network 207 problems, and $ß_M$ when there are network 207 problems. It may be considered that there are network problems when there has been a buffer underrun in the decoder 211 (no data in the interface Y) at least once in, for example, the last 60 seconds. In an example, if there are network issues, the buffer time S can be modified to be at least ß(t), which provides a safety margin for operation (which overrides lag-sensitivity M). Other implementations can be used for better tuning the trade-off between live lag and buffer underrun risk.

Accordingly, there is provided a method for modifying a buffer 209 size S at an apparatus 213, comprising receiving, at the apparatus 213, data representing a maximum lag value, M, for a video stream, and increasing or decreasing the buffer size, S, to provide a buffer time less than or equal to the maximum lag value, M.

According to an example, in order to provide a measure for M, the saliency signal 251 can be mapped to at least one maximum lag value for the video stream A in question. Referring to figures 3a-c for example, in figure 3a a signal value 301 can map to a preselected value for M, whereas a signal value of 303 can indicate to maximum lag value is required. Similar considerations hold for the examples of figures 3b and 3c, where the discrete multi-valued or continuous measure for the signal 251 can be mapped to multiple different predetermined values for M, thereby enabling a finer grained treatment of the saliency in a video stream and finer control over the size of a buffer.

As noted above, in an example, a salient portion of a video stream can be determined using video content of and/or audio (including, for example, prosody of speech) content associated with the video stream. The signal 251 indicating the saliency, which can be mapped to a maximum lag value at the lag sensitivity detector 250 or in the lag sensitivity actuator 253, can be transmitted in-band with or out-of-band from the video stream in question.

This may be applied on top of any other solution of latency control, and means that it is very simple to control the trade-off between the different QoE-affecting parameters, by controlling the values of M and ß(t) to favor either low lag or network safeness, and the allowed variation of M and ß(t), as well as the maximum D, to control the dynamic adaptation capability of the system, as well as the impact of clock variation in QoE.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

**Claims**

1. A method for modifying a buffer size at an apparatus, the method comprising:

   receiving, at the apparatus, data representing a maximum lag value, M, for a video stream; and increasing or decreasing the buffer size to provide a buffer time, S, less than or equal to the maximum lag value.

2. A method as claimed in claim 1, wherein the buffer size is increased or decreased by respectively decreasing or increasing a clock speed, C, of a decoder for the buffer.

3. A method as claimed in claim 2, further comprising:

   decreasing or increasing the clock speed, C, of the decoder for a period of time, T, by a predetermined percentage, D.

4. A method as claimed in claim 3, wherein:

   T = |S0 - S| / D, where S0 is the buffer time before modification.

5. A method as claimed in any preceding claim, further comprising:

   determining a salient portion of the video stream;

and
generating a corresponding saliency signal for the video stream.

6. A method as claimed in claim 5, wherein the saliency signal is a binary, continuous or discrete multi-valued measure of the saliency of the video stream.

7. A method as claimed in claim 5 or 6, further comprising mapping the saliency signal to at least one maximum lag value for the video stream.

8. A method as claimed in any of claims 5 to 7, further comprising:

   determining the salient portion of the video stream using video content of and/or audio content associated with the video stream.

9. A method as claimed in any preceding claim, further comprising:

   transmitting the data representing a maximum lag value in-band with or out-of-band from the video stream.

10. A system, comprising:

    a lag sensitivity detector to:

       receive data representing a video stream; and
       transmit a saliency signal representing one or more salient portions in or events of a video stream generated using the data representing the video stream and/or an audio component of the video stream;
       a lag sensitivity actuator to receive the saliency signal; and
       modify a buffer size at an apparatus using a maximum lag value, M, for the video stream generated using the saliency signal by increasing or decreasing the buffer size to provide a buffer time, S, less than or equal to the maximum lag value.

11. A system as claimed in claim 10, further comprising a decoder, the lag sensitivity actuator further configured to decrease or increase the clock speed, C, of the decoder for a period of time, T, by a predetermined percentage, D.

12. A lag sensitivity detector to receive data representing a video stream; and transmit a saliency signal representing one or more salient portions in or events of a video stream generated using the data representing the video stream and/or an audio component of the video stream.

13. A lag sensitivity actuator to receive a saliency signal representing one or more salient portions or events of a video stream; and
    modify a buffer size at an apparatus using a maximum lag value, M, for the video stream generated using the saliency signal by increasing or decreasing the buffer size to provide a buffer time, S, less than or equal to the maximum lag value

14. A lag sensitivity actuator as claimed in claim 14, further configured to decrease or increase the clock speed, C, of a decoder for a period of time, T, by a predetermined percentage, D.

15. A non-transitory machine-readable storage medium encoded with instructions executable by a processor of a user apparatus, the machine-readable storage medium comprising:

    instructions to receive data representing a maximum lag value, M, for a video stream; and instructions to increase or decrease an apparatus buffer size to provide a buffer time, S, less than or equal to the maximum lag value.

Figure 1

Figure 2

Figure 3

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2015/067186 A1 (KUHN STEVEN [US]) 5 March 2015 (2015-03-05) * paragraph [0060] - paragraph [0082]; figures 2,5-8 * ----- | 1-15 | INV. H04N21/24 H04N21/44 |
| A | WO 2008/084179 A1 (NDS LTD [GB]; TAYLOR RAY [GB]) 17 July 2008 (2008-07-17) * abstract * ----- | 2-4,11, 14 | |

**TECHNICAL FIELDS SEARCHED (IPC)**

H04N

The present search report has been drawn up for all claims

| Place of search | Date of completion of the search | Examiner |
|---|---|---|
| The Hague | 13 November 2017 | Santos Conde, José |

CATEGORY OF CITED DOCUMENTS

X : particularly relevant if taken alone
Y : particularly relevant if combined with another
 document of the same category
A : technological background
O : non-written disclosure
P : intermediate document

T : theory or principle underlying the invention
E : earlier patent document, but published on, or
 after the filing date
D : document cited in the application
L : document cited for other reasons

.....................................................................................

& : member of the same patent family, corresponding
 document

EPO FORM 1503 03.82 (P04C01)

## ANNEX TO THE EUROPEAN SEARCH REPORT
## ON EUROPEAN PATENT APPLICATION NO.

EP 17 38 2641

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2017

| Patent document cited in search report | | | Publication date | Patent family member(s) | | | Publication date |
|---|---|---|---|---|---|---|---|
| US 2015067186 | A1 | | 05-03-2015 | CN | 105556977 | A | 04-05-2016 |
| | | | | EP | 3042502 | A1 | 13-07-2016 |
| | | | | JP | 2016537914 | A | 01-12-2016 |
| | | | | US | 2015067186 | A1 | 05-03-2015 |
| | | | | WO | 2015034698 | A1 | 12-03-2015 |
| WO 2008084179 | A1 | | 17-07-2008 | NONE | | | |

EPO FORM P0459

For more details about this annex : see Official Journal of the European Patent Office, No. 12/82